# EUROPEAN PATENT APPLICATION

(11) **EP 1 465 195 A1**
(43) Date of publication of application: **06.10.2004**
(21) Application number: 04251919.9
(22) Date of filing: 31.03.2004
(51) Int. Cl.: G11B 27/10, H04N 5/76

(54) **Digital recording/reproducing apparatus with a timeshift function, and method therefor**

(30) Priority: 02.04.2003 KR 2003020739
(71) Applicant: Samsung Electronics Co., Ltd., Suwon-si, Gyeonggi-do (KR)
(72) Inventor: Bak, Bong-gil, Seoul (KR)
(74) Representative: Robinson, Ian Michael

(57) **Abstract**

A digital recording/reproducing apparatus including a first data storage medium (150) with a timeshift function; and a controller, which records received compressed data on both the first data storage medium (150) and a second data storage medium (200) without a timeshift function if a recording command that requires data to be recorded on the second data storage medium (200) is received, and reads data recorded on the first data storage medium (150) for data reproduction if a reproduction command for data being recorded is received. Therefore, it is possible to include a timeshift function to reproduce recorded data and to output the reproduced data to a user while recording data according to the user's command, even when the digital recording/reproducing apparatus records data on a data storage medium without the timeshift function.

## Description

The present invention relates to a digital recording/reproducing apparatus with a timeshift function and a method for the apparatus.

The development of semiconductor and data storage medium technologies has led to the increase in usage of digital type data recording/reproducing apparatuses, instead of conventional analog type data recording/reproducing apparatuses.

The digital type data recording/reproducing apparatus compresses data, such as an analog or a digital television signal, etc., in a digital format, stores the compressed data, and then decodes the stored data to reproduce the data on a display device such as a television or monitor.

Recently, various digital video recording/reproducing apparatuses, including both a hard disk and a removable high-capacity storage medium, have been marketed.

Meanwhile, the digital type data recording/reproducing apparatus provides various functions that are not provided by the conventional analog type data recording/reproducing apparatus. For example, one such function is a timeshift function.

The timeshift function is a function to record digital data and simultaneously decode and reproduce recorded data. For example, while recording a television program that is being broadcast, the timeshift function can reproduce the recorded program from the beginning according to a user's command. However, it is not through timeshift that a currently input television signal is shown in real time to a user through a display device. Timeshift is a function to record a television signal on a data storage medium and then reproduce and show the recorded television signal.

To implement the timeshift function, since the digital data recording/reproducing apparatus alternately performs an operation of compressing input data in real time and storing the compressed data in a predetermined area of a data storage medium, and an operation of reading, decoding, and reproducing data pre-recorded on a different area of the data storage medium, the digital data recording/reproducing apparatus should repeatedly perform reading and writing operations while a pickup travels between various areas of the data storage medium.

The timeshift function is dependent on the reading and writing property of the data storage medium mounted in the digital data recording/reproducing apparatus. To implement the timeshift function, the data storage medium must have a fast access time and good reading and writing performances. Accordingly, it is difficult to correctly implement the timeshift function for a data storage medium that has a slow access time and does not allow frequent track jumps during data recording.

Data storage mediums having difficulties in implementing the timeshift function include optical recording mediums such as CD-R, CR-RW, DVD-R, DVD-RW, DVD+R, and DVD+RW.

In order to correctly move a pickup for recording data or reading recorded data on or from a specific area of the optical recording medium, a precise control technique is required. The optical recording medium has a slower access time than that of the hard disk. Furthermore, the frequent pickup movement decreases a speed of accessing a file system in the optical recording medium when data on the optical recording medium is reproduced.

Also, a physical limitation exists in that whenever a pickup is moved to read data at a different location while recording data on an area, a part of the area on which data is being recorded before is continuously wasted.

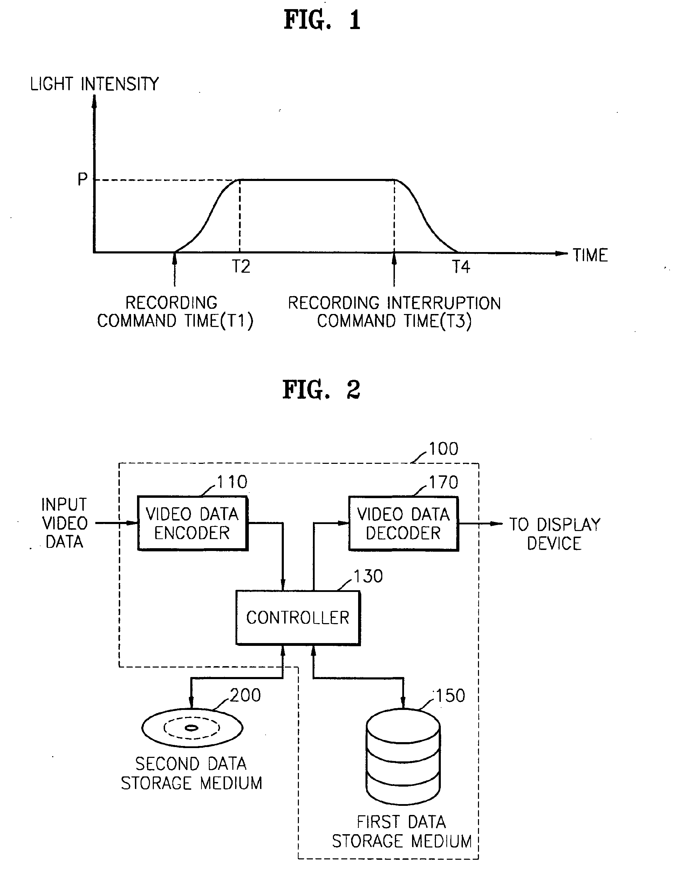

Figure 1 is a graph showing a recording property of an optical recording medium.

Referring to Figure 1, T1 is a time when a pickup begins to irradiate light to record data according to a user's command. T2 is a time when the pickup reaches an effective light intensity P for recording data on the optical recording medium. T3 is a time when a recording stop command is generated. T4 is a time when a light intensity reaches "zero".

Accordingly, during times T2 and T4, data is not recorded on a light-irradiated area of the optical recording medium and the area is wasted.

As described above, even though a user, when selecting a timeshift function, wants to reproduce data while data is being recorded on a medium, such as an optical recording medium mounted in a digital data recording/reproducing apparatus, the digital data recording/reproducing apparatus cannot execute the timeshift function.

According to the present invention there is provided an apparatus and method as set forth in the appended claims. Preferred features of the invention will be apparent from the dependent claims, and the description which follows.

The present invention provides a digital recording/reproducing apparatus and method, with a timeshift capability to reproduce recorded data while recording data on a data storage medium without a timeshift function.

According to an aspect of the invention, there is provided a digital recording/reproducing apparatus comprising: a first data storage medium with a timeshift function; and a controller, to record received compressed data on both the first data storage medium and a second data storage medium without the timeshift function if a recording command that requires data to be recorded on the second data storage medium is received, and read data recorded on the first data storage medium for data reproduction if a reproduction command for data being recorded is received.

According to another aspect of the invention, there is provided a digital recording/reproducing apparatus comprising: a first data storage medium with a timeshift function; and a controller, which if a recording command that requires data to be recorded on a second data storage medium without the timeshift function is received, records received compressed data on the first data storage medium, begins to read the compressed data recorded on the first data storage medium if a predetermined amount of compressed data is recorded on the first data storage medium, and records the read data on the second data storage medium; and if a reproduction command for data being recorded is received, reads data recorded on the first data storage medium for data reproduction.

According to still another aspect of the invention, there is provided a digital recording/reproducing method comprising: receiving a recording command that requires data to be recorded on a second data storage medium without a timeshift function; compressing received data and generating compressed data; recording the compressed data on both a first data storage medium with the timeshift function and the second data storage medium; and if a reproduction command for data being recorded is received, reading data recorded on the first data storage medium for data reproduction.

According to still yet another aspect of the invention, there is provided a digital recording/reproducing method comprising: receiving a data recording command that requires data to be recorded on a second data storage medium without a timeshift function; compressing received data and generating compressed data; recording the compressed data on a first data storage medium with the timeshift function; if a predetermined amount of compressed data is recorded on the first data storage medium, beginning to read the compressed data recorded on the first data storage medium and recording the read data on the second data storage medium; and if a reproduction command for data being recorded is received, reading data recorded on the first data storage medium for data reproduction.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
Figure 1 is a graph showing a recording property of an optical recording medium;
Figure 2 is a block diagram of a digital recording/reproducing apparatus with a timeshift function, according to an embodiment of the invention;
Figure 3 is a flowchart illustrating a method for the digital recording/reproducing apparatus with a timeshift function; and
Figure 4 is a flowchart illustrating a method for the digital recording/reproducing apparatus with a timeshift function, according to another embodiment of the invention.

Reference will now be made in detail to the embodiments of the present invention, examples of which are illustrated in the accompanying drawings, wherein like reference numerals refer to the like elements throughout. The embodiments are described below to explain the present invention by referring to the figures.

Figure 2 is a block diagram of a digital recording/reproducing apparatus with a timeshift function, according to an embodiment of the invention.

Referring to Figure 2, a digital recording/reproducing apparatus 100 comprises a video data encoder 110, a controller 130, a first data storage medium 150, a video data decoder 170, and a removable second data storage medium 200 according to a user's selection.

The video encoder 110 compresses received video data using a predetermined compression method and outputs the compressed video data to the controller 130.

The controller 130 receives the compressed video data from the video data encoder 110. The controller 130 records the compressed video data on the first data storage medium 150, deletes the compressed video data from the second data storage medium 200, or reads data recorded on the first data storage medium 150 and the second data storage medium 200 to output to the video decoder 170.

The controller 130 is a comprehensive device including a drive function for recording data on the first data storage medium 150 and the second data storage medium 200. Although not shown in the drawing, the digital recording/reproducing apparatus 100 generally includes separate drives for the first data storage medium 150 and the second data storage medium 200.

The first data storage medium 150 is, for example, a hard disk as a medium having a sufficiently fast data access time and a good data reading/writing performance in order to implement a timeshift function.

The video data decoder 170 receives data recorded on a first data storage medium 150 and the second data storage medium from the controller 130, decodes the received data using a predetermined method, and output the decoded data to a display device (not shown).

The second data storage medium 200 is, for example, an optical recording medium, wherein the second data storage medium has difficulty implementing a timeshift function.

A digital recording/reproducing method for providing a timeshift function according to the present invention will be described according to the structure of the digital recording/reproducing apparatus as described above.

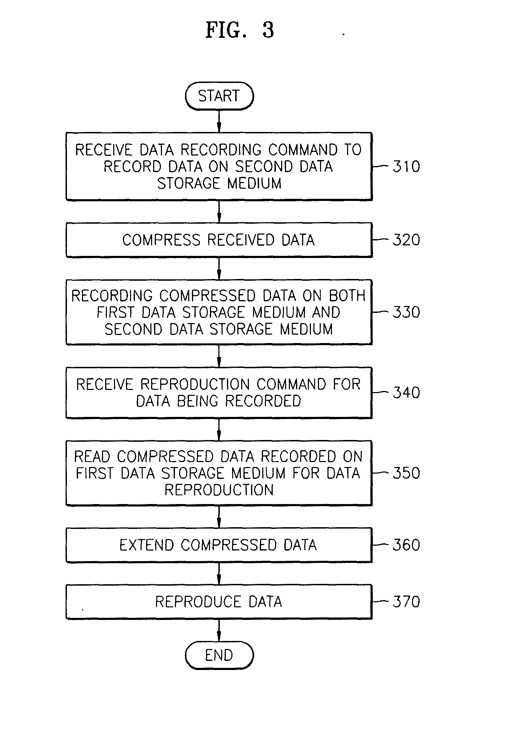

Figure 3 is a flowchart illustrating a method for a digital recording/reproducing apparatus with a timeshift function, according to an embodiment of the invention.

In operation 310, a second data storage medium 200 without a timeshift function is inserted in the digital recording/reproducing medium 100 by a user. In operation, the controller 130 of the digital recording/reproducing apparatus 100 then receives a recording command from a user that requires predetermined video data to be recorded on the second data storage medium 200.

In operation 320, if predetermined video data is input to the video data encoder 110, the video data encoder 110 compresses the input video data and generates compressed data. The generated compressed data is output to the controller 130.

In operation 330, the controller 130 that received the compressed data from the video data encoder 110 records the compressed data on both the first data storage medium 150 with the timeshift function and the second data storage medium. As a result, the first data storage medium 150 and the second data storage medium 200 store the same compressed data.

The first data storage medium 150 may reserve a recording space corresponding to a maximum recording capacity of the second data storage medium 200 in order to store the same data as data to be recorded on the second data storage medium 200.

In operation 350, if during data recording, a user inputs to the controller 130 a timeshift command requiring a data reproduction (operation 340), the controller 130 reads data pre-recorded on the first data storage medium 150 for data reproduction.

In operation 360, the read data is input to the video data decoder 170 and extended. Then, in operation 370, the read data is reproduced through a display device to be shown to the user.

Although not shown, in a separate operation, if the data is completely recorded on the second data storage medium 200, the controller 130 deletes the same data recorded on the first data storage medium 150 for the timeshift function, from the first data storage medium 150. By deleting unnecessary data, the data storage space of the first data storage medium 150 can be more efficiently used.

Therefore, although the user requires to record data on the second data storage medium 200 without the timeshift function, the same data is also recorded on the first data storage medium 150 with the timeshift function. Accordingly, when the timeshift command is input by the user, the same data recorded on the first data storage medium 150 is read and is provided to the user.

Meanwhile, a recording bit rate of the second data storage medium 200 is sometimes required to be smaller than a predetermined value or within a predetermined range. For example, if the second data storage medium 200 is an optical recording medium, the recording bit rate is required to be a Constant Linear Velocity (CLV) or a Constant Angular Velocity (CAV).

At this time, the controller 130 controls the video data encoder 110 so that a generation amount of compressed data is adjusted considering the recording bit rate and a size of a buffer (not shown) for temporarily storing data to be recorded on the second data storage medium 200. That is, the controller 130 controls the video data encoder 110 so that more compressed data is generated if an amount of compressed data stored in the buffer is low. As a method for generating more compressed data than the amount of compressed data that is actually generated, a method that adds dummy data to the compressed data can be used.

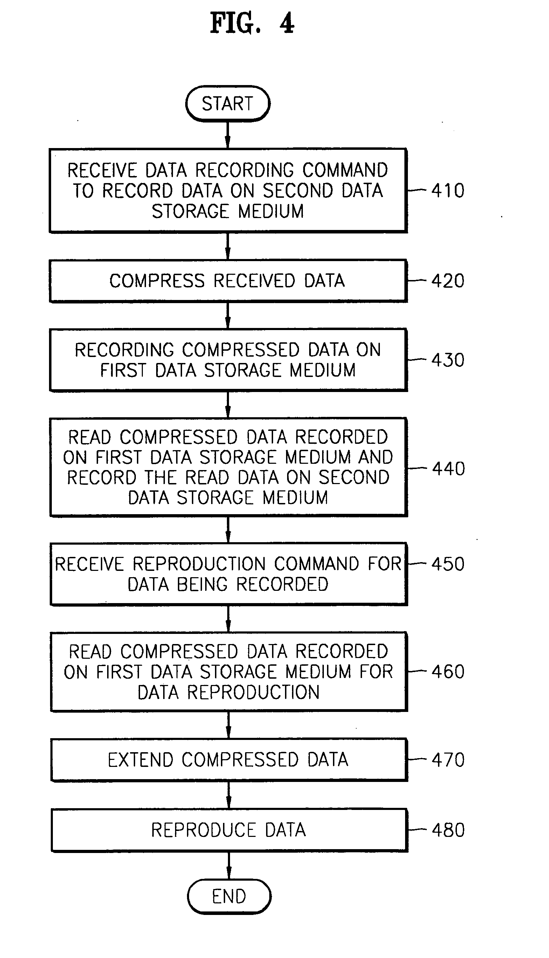

Figure 4 is a flowchart illustrating a method for digital recording/reproducing apparatus with a timeshift function, according to another embodiment of the invention.

The second data storage medium 200 without a timeshift function is inserted in the digital recording/reproducing apparatus 100 by a user. In operation 410, the controller 130 of the digital recording/reproducing apparatus 100 receives from a user a recording command to record predetermined video data on the second data storage medium 200.

In operation 420, if predetermined video data is input to the video data encoder 110, the video data encoder 110 compresses the input video data and generates compressed data. The generated compressed data is output to the controller 130.

In operation 430, the controller 130 that received the compressed data from the video data encoder 110 records the compressed data on the first data storage medium 150 with a timeshift function.

Meanwhile, the first data storage medium 150 may reserve a recording space corresponding to a maximum data recording capacity of the second data storage medium 200, in order to store the same data as data to be recorded on the second data storage medium 200.

In operation 440, if a predetermined amount of compressed data is recorded on the first data storage medium 150, the compressed data recorded on the first data storage medium 150 is read and is recorded on the second data storage medium 200.

That is, the first data storage medium 150 is used as an intermediate buffer to record the compressed data on the second data storage medium 200. Since the first data storage medium 150 has a high maximum bit rate, freely performs recording interruption and recording resumption, and has a larger storage capacity than the buffer for temporarily storing data, unlike the second data storage medium 200, it is not necessary to finely control input data to be recorded on the first data storage medium 150.

If, in operation 450, a timeshift command requiring a data reproduction is input by the user to the controller 130 during recording data, then, in operation 460, the controller 130 reads data pre-recorded on the first data storage medium 150 for data reproduction.

In operation 470, the read data is input to the video data decoder 170 and extended and then is reproduced through a display device to be shown to the user (step 480).

Although not shown, in a separate operation, if the data is completely recorded on the second data storage medium 200, the controller 130 deletes the same data recorded on the first data storage medium 150 for the timeshift function, from the first data storage medium 150. By deleting unnecessary data, the data storage space of the first data storage medium 150 can be more efficiently used.

Meanwhile, as described above, since the first data storage medium 150 has a larger storage capacity than the buffer for temporarily storing the data, the controller 130 first stores sufficiently large data in the first data storage medium 150, then reads the stored data, and thereafter reads and records the stored data on the second data storage medium 200 at a constant recording bit rate. However, only a small amount of data can be stored in a standby state in the first data storage medium 150 in order to be recorded on the second data storage medium 200. In this case, the controller 130 controls the video data encoder 110 so that the generation amount of compressed data increases, as in the above-described first embodiment.

On the contrary, if a large amount of data is recorded on the first data storage medium 150, it is possible to record data on the first data storage medium 150 continuously without controlling the video data encoder 110 as long as the storage capacity of the first data storage medium 150 is sufficient.

If the timeshift command is input by the user during recording data on the first data storage medium 150 or during reading data for recording data on the second data storage medium 200, the controller 130 which performs a drive function for recording or reading data on/from the first data storage medium 150, must read data recorded on the first data storage medium 150 for data reproduction. In this case, the controller 130 should constantly perform one recording operation and two reading operations. However, in the case of a data storage medium such as a hard disk having a high-speed access time property, such a process can be performed sufficiently.

The present invention may be embodied in a general purpose digital computer by running a program from a computer readable medium, including but not limited to storage media such as magnetic storage media (e.g. ROM's, floppy disks, hard disks, etc.), optically readable media (e.g., CD-ROMs, DVDs, etc.) and carrier waves (e.g., transmissions over the Internet). The present invention may be embodied as a computer readable medium having a computer readable program code unit embodied therein for causing a number of computer system connected via a network to effect distributed processing.

As described above, according to the present invention, a digital recording/reproducing apparatus has a timeshift function to reproduce and output data to a user while recording data according to the user's command, even when the digital recording/reproducing apparatus records data on a data storage medium without the timeshift function.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital recording/reproducing apparatus comprising:
a first data storage medium (150) with a timeshift function; and
a controller, recording received compressed data on both the first data storage medium (150) and a second data storage medium (200) without the timeshift function if a recording command that requires data to be recorded on the second data storage medium (200) is received, and reading data recorded on the first data storage medium (150) for data reproduction if a reproduction command for data being recorded is received.

2. The digital recording/reproducing apparatus of claim 1, further comprising a data encoder (110) compressing the data and outputting the compressed data to the controller, wherein a recording bit rate of the second data storage medium (200) is required to be smaller than a predetermined value or within a predetermined range, the data encoder (110) controls a generation amount of data according to a control of the controller so that the requirement is satisfied.

3. The digital recording/reproducing apparatus of claim 1 or 2, wherein if the compressed data is completely recorded on the second data storage medium (200), the controller deletes the same compressed data recorded on the first data storage medium (150).

4. The digital recording/reproducing apparatus of any preceding claim, wherein the first data storage medium (150) is a hard disk.

5. The digital recording/reproducing apparatus of any preceding claim, wherein the second data storage medium (200) is an optical recording medium.

6. The digital recording/reproducing apparatus of any preceding claim, wherein the second data storage medium (200) is a removable data storage medium.

7. The digital recording/reproducing apparatus of any preceding claim, wherein the data is video data.

8. A digital recording/reproducing apparatus comprising:
a first data storage medium (150) with a timeshift function; and
a controller, which if a recording command that requires data to be recorded on a second data storage medium (200) without a timeshift function is received, records received compressed data on the first data storage medium (150), begins to read the compressed data recorded on the first data storage medium (150) if a predetermined amount of compressed data is recorded on the first data storage medium (150), and records the read data on the second data storage medium (200), and if a reproduction command for data being recorded is received, reads data recorded on the first data storage medium (150) for data reproduction.

9. The digital recording/reproducing apparatus of claim 8, further comprising a data encoder (110) compressing the data and outputting the compressed data to the controller, wherein a recording bit rate of the second data storage medium (200) is required to be smaller than a predetermined value or within a predetermined range, the controller compares an amount of data recorded on the first data storage medium (150) with the amount of data recorded on the second data storage medium (200), and controls the data encoder (110) so that the recording bit rate of the second data storage medium (200) is smaller than the predetermined value or within the predetermined range, to thereby adjust a generation amount of data of the data encoder (110).

10. The digital recording/reproducing apparatus of claim 8 or 9, wherein if the compressed data is completely recorded on the second data storage medium (200), the controller deletes the same compressed data recorded on the first data storage medium (150).

11. The digital recording/reproducing apparatus of any of claims 8 to 10, wherein the first data storage medium (150) is a hard disk.

12. The digital recording/reproducing apparatus of any of claims 8 to 11, wherein the second data storage medium (200) is an optical recording medium.

13. The digital recording/reproducing apparatus of any of claims 8 to 12, wherein the second data storage medium (200) is a removable data storage medium.

14. The digital recording/reproducing apparatus of any of claims 8 to 13, wherein the data is video data.

15. A digital recording/reproducing method comprising:
receiving a recording command that requires data to be recorded on a second data storage medium (200) without a timeshift function;
compressing received data and generating compressed data;
recording the compressed data on both a first data storage medium (150) with the timeshift function and the second data storage medium (200); and
if a reproduction command for data being recorded is received, reading data recorded on the first data storage medium (150) for data reproduction.

16. The digital recording/reproducing method of claim 15, wherein a recording bit rate of the second data storage medium (200) is required to be smaller than a predetermined value or within a predetermined range, satisfying the requirement by controlling a generation amount of data by compressing received data and generating compressed data.

17. The digital recording/reproducing method of claim 15 or 16, further comprising deleting the same compressed data recorded on the first data storage medium (150) if the compressed data is completely recorded on the second data storage medium (200).

18. The digital recording/reproducing method of any of claims 15 to 17, further comprising using a hard disk as the first data storage medium (150).

19. The digital recording/reproducing method of any of claims 15 to 18, further comprising using an optical recording medium as the second data storage medium (200).

20. The digital recording/reproducing method of any of claims 15 to 19, wherein the second data storage medium (200) is a removable data storage medium.

21. The digital recording/reproducing method of any of claims 15 to 20, further comprising using video data as the data.

22. A digital recording/reproducing method comprising:
receiving a data recording command that requires data to be recorded on a second data storage medium (200) without a timeshift function;
compressing received data and generating compressed data;
recording the compressed data on a first data storage medium (150) with the timeshift function;
if a predetermined amount of compressed data is recorded on the first data storage medium (150), reading the compressed data recorded on the first data storage medium (150) and recording the read data on the second data storage medium (200); and
if receiving a reproduction command for data being recorded, reading data recorded on the first data storage medium (150) for data reproduction.

23. The digital recording/reproducing method of claim 22, wherein if a recording bit rate of the second data storage medium (200) is required to be smaller than a predetermined value or within a predetermined range, the method further comprises:
comparing an amount of data recorded on the first data storage medium (150) with that recorded on the second data storage medium (200); and
adjusting a generation amount of compressed data so that the recording bit rate of the second data storage medium (200) is smaller than the predetermined value or within the predetermined range.

24. The digital recording/reproducing method of claim 23, further comprising deleting the same compressed data recorded on the first data storage medium (150) if the compressed data is completely recorded on the second data storage medium (200).

25. The digital recording/reproducing method of claim 23 or 24, further comprising using a hard disk as the first data storage medium (150).

26. The digital recording/reproducing method of any of claims 23 to 25, further comprising using an optical recording medium as the second data storage medium (200).

27. The digital recording/reproducing method of any of claims 23 to 26, wherein the second data storage medium (200) is a removable data storage medium.

28. The digital recording/reproducing method of any of claims 23 to 27, further comprising using video data as the data.
